(19) Europäisches Patentamt
European Patent Office
Office européen des brevets

(11) **EP 3 624 983 B1**

(12) **EUROPÄISCHE PATENTSCHRIFT**

(45) Veröffentlichungstag und Bekanntmachung des Hinweises auf die Patenterteilung:
**27.11.2024 Patentblatt 2024/48**

(21) Anmeldenummer: **18720200.7**

(22) Anmeldetag: **19.04.2018**

(51) Internationale Patentklassifikation (IPC):
**B23K 103/00** (2006.01)  **C03B 33/02** (2006.01)
**B23K 26/53** (2014.01)

(52) Gemeinsame Patentklassifikation (CPC):
**C03B 33/0222; B23K 26/53;** B23K 2103/54;
Y02P 40/57

(86) Internationale Anmeldenummer:
**PCT/EP2018/060059**

(87) Internationale Veröffentlichungsnummer:
**WO 2018/210519 (22.11.2018 Gazette 2018/47)**

(54) **BAUTEIL, UMFASSEND GLAS ODER GLASKERAMIK, MIT ENTLANG EINER VORGEGEBENEN TRENNLINIE ANGEORDNETEN VORSCHÄDIGUNGEN UND VERFAHREN ZUR HERSTELLUNG DES BAUTEILS**

COMPONENT COMPRISING GLASS OR GLASS CERAMIC, HAVING PRE-DAMAGED POINTS ALONG A PREDETERMINED DIVIDING LINE AND METHOD FOR PRODUCING THE COMPONENT

PIÈCE, COMPRENANT DU VERRE OU DE LA VITROCÉRAMIQUE, COMPRENANT DES PRÉDÉTÉRIORATIONS DISPOSÉES LE LONG D'UNE LIGNE DE SÉPARATION PRÉDÉFINIE ET PROCÉDÉ POUR LA FABRICATION D'UNE TELLE PIÈCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.05.2017 DE 102017110967**

(43) Veröffentlichungstag der Anmeldung:
**25.03.2020 Patentblatt 2020/13**

(73) Patentinhaber: **SCHOTT AG**
**55122 Mainz (DE)**

(72) Erfinder:
• **THOMAS, Jens Ulrich**
**55128 Mainz (DE)**
• **LENTES, Frank-Thomas**
**55411 Bingen (DE)**
• **ORTNER, Andreas**
**55435 Gau-Algesheim (DE)**
• **SCHATZ, Jonas**
**55118 Mainz (DE)**
• **KLUGE, Michael**
**63073 Offenbach a.M. (DE)**

(74) Vertreter: **Ullrich & Naumann PartG mbB**
**Schneidmühlstrasse 21**
**69115 Heidelberg (DE)**

(56) Entgegenhaltungen:
EP-A1- 2 922 793  WO-A1-2014/079478
DE-A1- 102014 116 957  US-A1- 2016 067 822

• ZHANG X.R. ET AL: "Simulation of microscale densification during femtosecond laser processing of dielectric materials", APPLIED PHYSICS A, vol. 79, no. 4-6, 26 July 2004 (2004-07-26), Berlin/Heidelberg, pages 945 - 948, XP093123097, ISSN: 0947-8396, Retrieved from the Internet <URL:https://link.springer.com/content/pdf/10.1007/s00339-004-2576-3.pdf?pdf=preview> DOI: 10.1007/s00339-004-2576-3

- NAOYUKI KITAMURA: "Refractive index of densified silica glass", 15 December 1992 (1992-12-15), pages 1 - 5, XP093123121, Retrieved from the Internet <URL:https://pdf.sciencedirectassets.com/271563/1-s2.0-S0022309300X04188/1-s2.0-002230939390229Q/main.pdf?X-Amz-Security-Token=IQoJb3JpZ2luX2VjELj%2F%2F%2F%2F%2F%2F%2F%2F%2F%2FwEaCXVzLWVhc3QtMSJHMEUCIDzNLh7%2FejrjM7P5zWMDyBFooQFWccr1styws2mBEd1uAiEA%2FqQ17xc%2F%2BRoP5H2LJIZiltigCbmO7NJWbzolHrihLcoqswUlcR>[retrieved on 20240124]
- SAKAKURA MASAAKI ET AL: "Initial temporal and spatial changes of the refractive index induced by focused femtosecond pulsed laser irradiation inside a glass", PHYSICAL REVIEW B, vol. 71, no. 2, 1 January 2005 (2005-01-01), US, XP093123108, ISSN: 1098-0121, DOI: 10.1103/PhysRevB.71.024113
- LITTLE DOUGLAS J. ET AL: "Structural changes in BK7 glass upon exposure to femtosecond laser pulses", JOURNAL OF RAMAN SPECTROSCOPY, vol. 42, no. 4, 28 September 2010 (2010-09-28), GB, pages 715 - 718, XP093123113, ISSN: 0377-0486, Retrieved from the Internet <URL:https://api.wiley.com/onlinelibrary/tdm/v1/articles/10.1002%2Fjrs.2770> DOI: 10.1002/jrs.2770

**Beschreibung**

Bauteile, die Glas oder Glaskeramik umfassen und die entlang einer vorgegebenen Trennlinie angeordnete Vorschädigungen aufweisen, sind bekannt.

Solche Bauteile, können insbesondere mit den in folgenden Schriften beschriebenen Verfahren und Vorrichtungen hergestellt werden: DE 10 2012 110 971 A1, DE 10 2015 110 422 A1, DE 10 2015 116 848 A1, DE 10 2015 111 491 A1, DE 10 2015 116 846 A1, DE 10 2015 111 490 A1, DE 10 2015 120 950 A1, DE 10 2016 102 768 A1, DE 10 2017 100 015.1, DE 10 2017 206 461.7, DE 10 2017 100 755.5, DE 10 2017 103 381.5, EP 2 754 524 A1, US 2005/0024743 A1, KR 101 407994 B1.

Weitere Verfahren, Vorrichtungen und Verwendungen sind aus der EP 2 922 793 A1, der DE 10 2014 116 957 A1, der WO 2014/079478 A1 und der US 2016/067822 A1 bekannt geworden.

Aus Zhang X.R. et al.: "Simulation of microscale densification during femtosecond laser processing of dielectric materials", DOI: 10.1007/s00339-004-2576-3, Naoyuki Kitamura: "Refractive index of densified silica glass" (1992), Sakakura Masaaki et al.: "Initial temporal and spatial changes of the refractive index induced by focused femtosecond pulsed laser irradiation inside a glass", DOI: 10.1103/PhysRevB.71.024113 und Little Douglas J. et al.: "Structural changes in BK7 glass upon exposure to femtosecond laser pulses", DOI: 10.1002/jrs.2770, sind zudem alternative Messverfahren zur Bestimmung einer Materialdichte bekannt.

Bei dickeren Bauteilen, insbesondere bei solchen mit einer Dicke ab 3,5 mm zeigt sich, dass die Trennkante nach dem Trennen entlang der vorgegebenen Trennlinie eine geringe Güte und insbesondere eine hohe Rauigkeit aufweist. Dies führt regelmäßig zu einem erhöhten Ausschuss der getrennten Bauteile.

Insbesondere für die Verglasung von Verkehrsmitteln, wie Fahrzeuge, Flugzeuge oder Schienenverkehrsmittel, werden weiterentwickelte Bauteile, die Glas oder Glaserkeramik umfassen, nachgefragt, deren Trennkanten nach dem Trennen eine hohe Güte und insbesondere eine geringe Rauigkeit aufweisen müssen. Hier ist es notwendig, dass solche Bauteile wirtschaftlich mit geringem Ausschuss zur Verfügung gestellt werden und in den nachfolgenden Weiterverarbeitungsprozessen problemlos eingesetzt werden können. Solche Bauteile umfassen oft zwei unterschiedliche Glasscheiben, die mit einer Zwischenfolie aus Kunststoff laminiert sind und die entlang wenigstens einer Trennlinie vereinzelt wurden.

Dickere Glas- und Glaskeramikbauteile (z.B. Glaskeramiken auf Lithium-AluminiumSilikat-Basis), d.h. Glas- und Glaskeramikscheiben mit einer Dicke von mindestens 3,5 mm stellen insbesondere bei der Weiterbearbeitung eine Herausforderung dar:

- Schnitte sind mit herkömmlichen Ritz-Trennverfahren nur entlang gerader Linien, durchgehend von Kante zu Kante möglich.
- Toleranzen von unter einem Millimeter sind nur mit aufwendigen, Mehrschrittverfahren möglich, z. B. Ritzbrechen, mechanischem Fräsen und anschließendem Polieren.
- Partikelfreiheit kann mit bisherigen Verfahren nicht gewährleistet werden, d.h. anschließende Beschichtungen setzen aufwendige Reinigung der Glas- und Glaskeramiksubstrate voraus.

Aufgabe der Erfindung ist es dickere Bauteile, insbesondere Bauteile mit einer Dicke von mindestens 3,5 mm, die Glas oder Glaskeramik umfassen und die entlang einer vorgegebenen Trennlinie angeordnete Vorschädigungen aufweisen, bereitzustellen, die nach dem Trennen entlang der vorgegebenen Trennlinie eine bessere Güte und eine geringe Rauigkeit der Trennkannte aufweisen, so zu weniger Ausschuss führen und problemloser in Weiterverarbeitungsprozessen eingesetzt werden können. Weiterhin ist es Aufgabe der Erfindung Verfahren und Vorrichtung zur Herstellung von solchen Bauteilen und deren bevorzugte Verwendung zu finden.

Gelöst wird die Aufgabe durch ein Bauteil, das die Merkmale von Anspruch 1 aufweist: Bauteil, umfassend Glas oder Glaskeramik, mit entlang wenigstens einer vorgegebenen Trennlinie angeordneten Vorschädigungen, wobei die Trennlinie aus einer Reihe von hintereinanderliegenden Vorschädigungen besteht, die Vorschädigungen im Glas oder in der Glaskeramik durchgehend sind, wenigstens 90 % der Vorschädigungen zylindersymmetrisch sind, das Glas oder die Glaskeramik im Radius von 3 $\mu$m um die Längsachse der jeweiligen Vorschädigung eine Materialverdichtung von mindestens 1 % gegenüber der eigentlichen Materialdichte aufweist, der relative Gewichtsverlust pro Vorschädigung geringer als 10 % ist, und das Bauteil eine Dicke von mindestens 3,5 mm aufweist.

Das Bauteil kann bevorzugt eine Dicke von mindestens 5 mm, besonderes bevorzugt von mindestens 8 mm aufweisen. Bevorzugt weist das Bauteil eine Dicke im Bereich von mindestens 3,5 mm bis maximal 50 mm auf.

Die Erfinder haben erkannt, dass es bei dickeren Bauteilen, insbesondere bei Bauteilen mit einer Dicke von mindestens 3,5 mm, notwendig ist, dass die Trennlinie aus einer Reihe von hintereinanderliegenden Vorschädigungen besteht und, dass die Vorschädigungen im Glas oder in der Glaskeramik durchgehend sein müssen.

Je mehr Vorschädigungen zylinderförmig ausgeführt sind, desto besser wird die zugrundeliegende Aufgabe gelöst. Die Erfinder konnten zeigen, dass wenigstens 90 %, der Vorschädigungen zylindersymmetrisch ausgeführt sein müssen. Vorzugsweise sind wenigstens 95 % der Vorschädigungen zylindersymmetrisch ausgeführt, besonders bevorzugt wenigstens 98 % und ganz besonders bevorzugt im Wesentlichen alle Vorschädigungen.

Weiterhin konnten die Erfinder zeigen, dass das Glas oder die Glaskeramik im Radius von 3 $\mu$m um die Längsachse der jeweiligen zylindersymmetrischen Vorschädigung eine Materialverdichtung von mindestens 1 % gegenüber der eigentlichen Materialdichte aufweisen und der relative Gewichtsverlust pro Vorschädigung geringer als 10 % sein muss, um die zugrundeliegende Aufgabe zu lösen. Es wird davon ausgegangen, dass es bei dickeren Bauteilen, mit einer Dicke von mindestens 3,5 mm notwendig ist, die Vorschädigung derart auszuführen, dass die Dichte des Material um die Vorschädigung zunimmt und möglichst wenig Material abgetragen wird bzw. verloren geht (geringer Gewichtsverlust)

Dass das Glas oder die Glaskeramik im Radius von 3 $\mu$m um die Längsachse der jeweiligen zylindersymmetrischen Vorschädigung eine Materialverdichtung von mindestens 1 % gegenüber der eigentlichen Materialdichte aufweist kann mittels folgendem Messverfahren bestimmt werden: Lena Bressel, Dominique de Ligny, Camille Sonneville, et al. "Femtosecond laser induced density changes in GeO2 and SiO2 glasses: Fictive temperature effect [Invited]", Optical Materials Express, Vol. 1, No. 4, 605 613 (1 August 2011) DOI:10.1364/OME.1.000605. Der Nachweis der Materialverdichtung wurde hierbei indirekt über eine spektrale Verschiebung des Nd- Peaks im Ramanspektrum nachgewiesen. Dazu musste das Raman-Mikroskop einen Spektralbereich von 10000 cm$^{-1}$ haben, damit bei Anregung mit 488 nm die Nd-lumineszenz bei ca. 890 nm gemessen werden kann, und mit geeigneten motorisierten XYZ-Schrittmotor-Achsen und einem geeigneten Mikroskopobjektiv (NA > 0,7) ausgestattet sein, um eine Ortsauflösung kleiner als ein Mikrometer zu realisieren. Die erfindungsgemäßen Bauteile wurden im zu messenden Bereich mittels der Schrittmotoren abgerastert. An jedem Punkt wurde ein Raman-Spektrum des Nd-Peaks aufgenommen. Dessen spektrale Position wird aufgezeichnet und es wurde mit Normspektren auf Drücke und Dichten zurückgerechnet. Diese Normspektren wurden von Glas- oder Glaskeramik-Körpern aufgenommen, die mit Bandpressen verdichtet wurden. Eine weitere Überprüfung konnte durch ortsaufgelöste Brillouin-Spektren erfolgen.

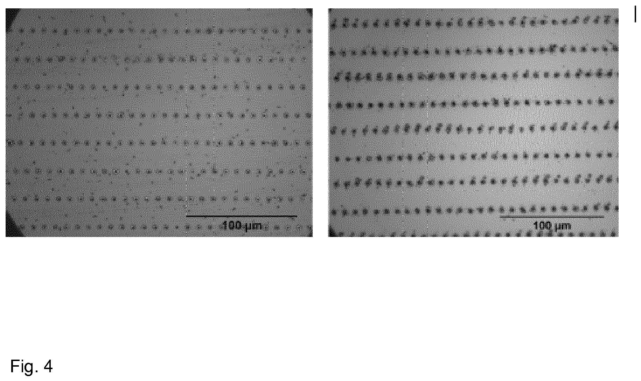

Dass der relative Gewichtsverlust pro Vorschädigung weniger als 10 % ist, wird wie folgt bestimmt (Hier exemplarisch für ein 2 mm dickes Kalk-Natron-Glas, das durch manuelles Ritzen und Brechen mit einem handelsüblichen Glasschneider auf eine Größe von 150 × 250 mm$^2$ gebracht wurde): Partikel, Fingerabdrücke und sonstige Verschmutzungen wurden durch Reinigen beider Seiten mit Glasreiniger, Ethanol und Druckluft manuell oder in einem automatisierten Reinigungsprozess (Waschmaschine) beseitigt. Anschließend wurde die so vorbereitete Probe auf einer Präzisionswaage (Mettler Toledo AB204-S) gewogen. Dabei wurde der gesamte Aufbau von einer transparenten Kunststoffbox umgeben, um die Messgenauigkeit zu erhöhen. Danach wurde die Probe auf der Aufnahme eines XY-Achsensystems (Aerotech Inc., 3D Micromac microSTRUCT) befestigt. Dabei wurde sie an zwei Anschlägen ausgerichtet und mit handelsüblichen Klebeband gegen Verrutschen gesichert. Die Laserbearbeitung erfolgte über einen Lumera HyperRapid bei einer Wellenlänge von 1064 nm und einer Pulsenergie von 400 $\mu$J. Zudem wurde eine 16 mm Bikonvexlinse (Thorlabs, Inc.) verwendet. Der Abstand der Linse zur Probe wurde derart eingestellt, dass der Fokuspunkt sich 1,6 mm unterhalb der Oberfläche befindet. Bei einer Laserfrequenz von 100 kHz wurde die Glasprobe auf eine Geschwindigkeit von 1 m/s in x-Richtung beschleunigt. Nach einer definierten Beschleunigungsstrecke wird die Blende des Lasers für eine Strecke von 90 mm geöffnet, was eine Trennlinie, bestehend aus einer Reihe von 9000 hintereinanderliegenden Vorschädigungen mit einem Abstand von 10 $\mu$m, erzeugte. Anschließend wurde die Glasprobe um 10 $\mu$m in y-Richtung verfahren und der gesamte Laserprozess 16000 Mal wiederholt. Dies erzeugte ein zweidimensionales Raster aus Vorschädigungen mit einer Größe von 90 × 160 mm$^2$ (siehe Figur 4). Anschließend wurde das Klebeband entfernt und die Probe ein weiteres Mal gewogen. Um eine Verfälschung des Messergebnisses auszuschließen, die durch eine Ablagerung von Partikeln während des Laserprozesses entstehen könnte, wurden die zuvor genannten Reinigungsschritte (Glasreiniger, Ethanol, Druckluft) oder automatisiertes Reinigungsverfahren ein weiteres Mal durchgeführt und die Probe noch einmal gewogen.

Folgende Berechnungsvorschrift wurde verwendet, um den relativen Gewichtsverlust pro Loch zu berechnen: Der theoretische Gewichtsverlust pro Vorschädigung, wenn das komplette Material der Vorschädigung aus der Probe entfernt werden würde, berechnet sich zu:

$$m_{theo} = \frac{\pi}{4} d^2 h \rho$$

d: Durchmesser der zylinderförmigen Vorschädigung, bestimmt aus SEM-Aufnahmen von Bruchkanten entlang der Vorschädigung

h: Glasdicke

$\rho$: Dichte der Probe, aus Materialdatenblatt

Der tatsächliche Gewichtsverlust $m_{actual}$ pro Vorschädigung ergibt sich, wenn der gemessene Gewichtsverlust

$m_{mess}$ durch die Anzahl der Vorschädigungen $N$ geteilt wird:

$$m_{actual} = \frac{m_{mess}}{N}$$

Durch Quotientenbildung ergibt sich der relative Masseverlust:

$$m_{rel} = \frac{m_{actual}}{m_{theo}}$$

Hier exemplarisch für ein 2 mm dickes Glas: Bei einer Probendicke von h = 2 mm und einer Dichte von $\rho$ = 2.5 g/cm$^3$ sowie einem ermittelten Lochdurchmesser von d = 600 $\pm$ 60 nm ergibt sich so ein theoretischer Masseverlust von $m_{theo}$ = 1413 $\pm$ 283 pg pro Vorschädigung (Für Probendicken von mindestens 3,5 mm lassen sich entsprechend die Werte ermitteln).

Der tatsächlich Gewichtsverlust ergibt sich bei $m_{mess}$ = 6 $\pm$ 1 mg und N = 5.8·10$^7$ zu $m_{actual}$ = 104 $\pm$ 17 pg pro Vorschädigung.

Der relative Gewichtsverlust berechnet sich daraus zu 7.4 $\pm$ 2.7 %. Alle Berechnungen erfolgen unter Berücksichtigung von Fehlerfortpflanzung.

Die Kantenrauhigkeit eines erfindungsgemäßen Bauteils, das entlang der vorgegebenen Trennlinie getrennt ist, kann beispielsweise mittels folgender Verfahren bestimmt werden und führt zu vergleichbaren Ergebnissen:

- Topographiebestimmung an Gläsern, Glaskeramiken, Keramiken, Metallen, Kunst- und Verbundstoffen mittels Weißlichtinterferenzmikroskopie;
- Hochaufgelöste Bestimmung der Oberflächentopographie an Gläsern, Glaskeramiken, Keramiken, Metallen, Kunststoffen, Verbundstoffen und Feststoffen mittels Rasterkraftmikroskopie;
- Taktil mittels eines Profilometers;
- Peter de Groot, Principles of interference microscopy for the measurement of surface topographie, Advances in Optics and Photonics 7, 1 - 65 (2015).

Die Schnittflächen der Vorschädigungen mit wenigstens einer Oberfläche von Glas oder Glaskeramik sind vorzugsweise kreisförmig. Die Radien der Schnittflächen sind hierbei vorzugsweise im Wesentlichen gleich.

Das Verhältnis von der Betragsdifferenz des Lochdurchmessers der Vorschädigung an der Oberfläche $d_o$ des Bauteils und der Unterseite des Bauteils $d_u$ zur Dicke des Bauteils h beträgt vorzugsweise T = $|d_o\text{-}d_u|/(2h)$ < 0,001, besonders bevorzugt ist T < 0,0001.

Das Bauteil besteht vorzugsweise aus mehreren Schichten, wobei die Schichten aus dem gleichen Material oder aus unterschiedlichem Material bestehen.

Vorzugsweise ist das Bauteil entlang der vorgegebenen Trennlinie getrennt bzw. trennbar. Besonders bevorzugt ist das Bauteil entlang der vorgegeben Trennlinie unter Einwirkung einer mechanischen oder thermischen Spannung getrennt bzw. trennbar.

Bevorzugt ist das Bauteil eine Verglasung für ein Verkehrsmittel oder ein Teil davon oder wird hierfür verwendet.

Bevorzugt wird das Bauteils zur Herstellung von Verglasungen von Verkehrsmitteln verwendet, insbesondere zur Herstellung von Front-, Heck-, Dach- oder Seitenverglasungen.

Um ein erfindungsgemäßes Bauteil herzustellen, werden die Vorschädigungen im Glas oder in der Glaskeramik mittels eines Besselstrahls 0.ter Ordnung erzeugt.

Die Vorrichtung zur Herstellung des Bauteils umfasst optische Mittel zur Erzeugung eines Besselstrahls 0.ter Ordnung, um die Vorschädigungen zu erzeugen.

Im Folgenden wird beschreiben, wie und weshalb bei einem erfindungsgemäßen Bauteil, die Vorschädigungen im Glas oder in der Glaskeramik bevorzugt mittels eines Besselstrahls 0.ter Ordnung erzeugt werden.

Bei dem Besselstrahl 0.ter Ordnung handelt es sich bevorzugt um einen gepulsten Laserstrahl. Vorzugsweise übersteigt die Intensität des Laserpulses auf der optischen Achse einen Schwellwert von 5 $\times$ 10$^{16}$ W/m$^2$.

Indem man mit Hilfe eines optischen Strahlformungssystems in Kombination mit einem gepulsten Laser mit einer Spitzenleistung von kleiner als 200 MW eine längs der optischen Achse Gauss-Bessel-förmige "linienförmige" Intensitätsverteilung erzeugt, die über die gesamte Glas- oder Glaskeramikdicke (Dicke insbesondere von mindestens 3,5 mm, bevorzugt mindestens 6 mm, ganz besonders bevorzugt mindestens 8 mm) eine Schwell-Intensität von mindestens 5 $\times$ 10$^{16}$ W/m$^2$ erzeugt. Experimente zeigten, dass diese Intensität erforderlich ist, um eine Vorschädigung (Mikrokanal) mit einem Durchmesser von ca. 1 $\mu$m und einer durchgehenden Länge über die gesamte Glas- oder Glaskeramikdicke zu erzeugen.

Um diese Anforderungen zu erreichen, sind mehrere Bedingungen einzuhalten.

1) Mit Hilfe einer strahlformenden Optik (z.B. mit einem Axikon-System) wird die Laserleistung überwiegend radial in die linienförmige Intensitätsverteilung eingespeist (näherungsweise analytisch beschreibbar durch eine Gauss-Bessel-Intensitätsverteilung I(r,z). Dies stellt sicher, dass im Wesentlichen nur innerhalb der linienförmigen Intensitätsverteilung nichtlineare Absorptionsmechanismen bis zur Plasma-Explosion stattfinden.

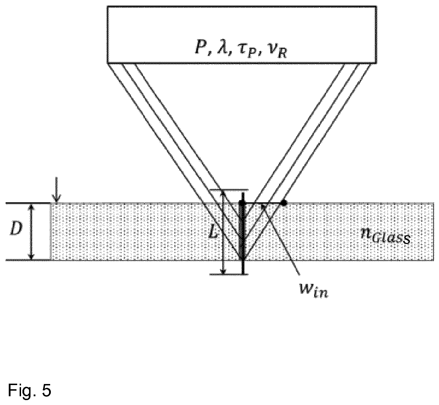

2) Die Länge L der linienförmigen Intensitätsverteilung muss mindestens um mindestens 0,5 mm über die Dicke h des dielektrischen Materials an beiden Oberflächen hinausragen (Figur 5).

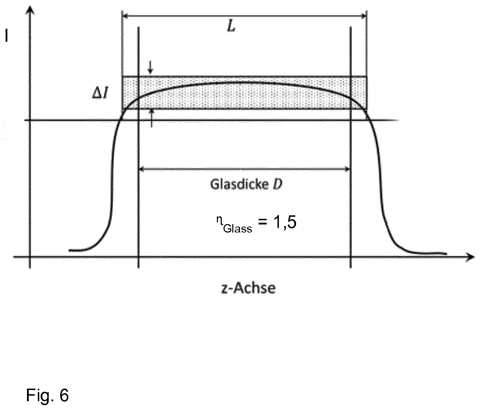

3) Die axiale Intensitätsverteilung (Figur 6) muss innerhalb von Glas oder Glaskeramik größer als etwa $5 \times 10^{16}$ W/m$^2$ betragen. Sie soll möglichst homogen verteilt sein, so dass ihr Wert nicht unter diesen Schwellwert sinkt. Andererseits sollte sie nicht um mehr als 20 % vom Schwellwert nach oben abweichen.

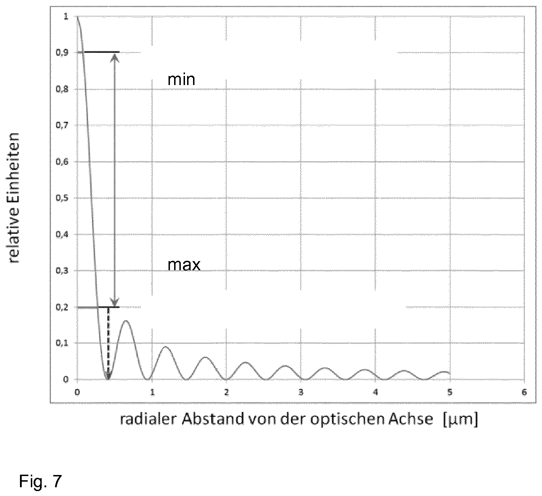

4) Damit dieser Schwellwert in einem möglichst kleinen transversalen Bereich zur Verfügung steht, ist es erforderlich, dass nur auf der optischen Achse im Beugungsmaximum 0. Ordnung der Schwellwert sicher erreicht wird; sehr vorteilhaft ist, dass dadurch dieser Radius deutlich kleiner als der Radius des ersten dunklen Beugungsrings. Andererseits darf die Intensität nicht so hoch sein, dass der 1. Beugungsring diese Schwelle erreicht (Figur 7). Dies würde zu einer massiven, aber unerwünschten Vergrößerung des Perforationskanals führen (von dem erhöhten Leistungsbedarf ganz abgesehen). Das bedeutet, dass die maximale Intensität nicht höher als um einen Faktor 6,16 der Schwellwertintensität ist.

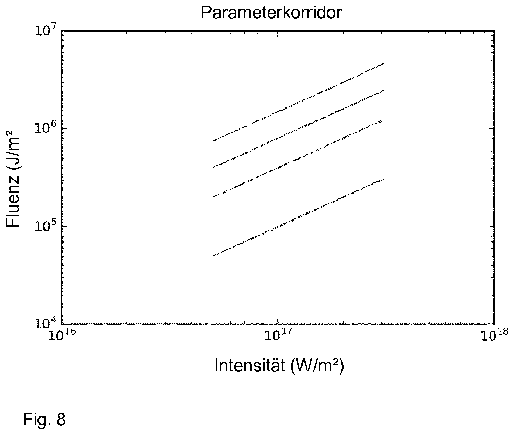

5) Damit sich eine möglichst lange Vorschädigung (Mikrokanal) ausbildet, müssen Fluenz F und Intensität I entlang der optischen Achse in einem optimalen Verhältnis stehen (Figur 8). Es hat sich gezeigt, dass $6 \times 10^{10} < I/F < 1 \times 10^{12}$, bevorzugt $1,25 \times 10^{11} < I/F < 2,5 \times 10^{11}$ sein muss.

6) Diese Vorschädigungen (Mikrokanäle) zeichnen sich dadurch aus, dass durch sie ein äußerst geringer Gewichts- und Volumenverlust auftritt. Es hat sich gezeigt, dass die nach obengenannten Anforderungen eingebrachten Vorschädigungen (Mikrokanäle) dergestalt sind, dass sie vorwiegend durch eine Verdichtung des Materials und nicht durch eine Verdampfung entstehen. Das heißt, dass nach dem Laser-Beschuss mehr als 95 % des Lochvolumens, vorzugsweise mehr als 98 % im Glas oder in der Glaskeramik verbleibt.

Auf diese Weise lassen sich lange Vorschädigungen mit einem Durchmesser von < 1 $\mu$m in Bauteilen aus Glas oder Glaskeramik auch mit einer Dicke von > 3,5 mm erzeugen.

Die dafür benötigte Laser-Spitzenleistung und das Strahlformungssystem wird in einem Beispiel vorgestellt (Zwei Beispiele sind in den Figuren 5 bis 8 gezeigt).

Vergleichsbeispiel mit einem Laser mit einer Spitzenleistung von 20 MW, einer Pulsbreite von 10 ps und einer sphärischen Linse zu Strahlformung, die aber keine durchgängige Mikroperforation auf einer Länge von 8 mm erzeugt.

Vergleichsbeispiel: Bauteil mit weniger als 3,5 mm Dicke
Lasertyp: ND-YAG, 1064 nm, gepulst, Repetitionsrate 200 kHz
Pulsbreite (FWHM): 10 ps
Pulsenergie: 200 $\mu$J bis 300 $\mu$J
Pulsform: Einzelpuls oder Pulsfolge mit 10 bis 50 ns Abstand. Pulsenergie innerhalb monoton abnehmend, eventuell gleichbleiben.
Im Anwendungbeispiel: 4 Pulse in Abstand von 20 ns, Pulsenergie abnehmend.
Strahlformende Optik: Bikonvexlinse 16 mm, Thorlabs; Ausgeleuchtet mit 12 mm Strahldurchmesser

Bevorzugte Erzeugung einer linienförmigen Schädigung in einem Kalk-Natron-Glas einer Dicke von 10 mm und Bruchkante, Laser-Spitzenleistung und Pulsdauer entsprechend der benutzten Optik so gewählt, dass die beschriebenen Anforderungen 5) und 6) erfüllt sind. Die für das Verfahren nötigen Anforderungen können beispielweise mit einem Laser erfüllt werden, der 10 ps kurze Pulse bei einer mittleren Leistung von mehr als 110 W emittiert, Wellenlänge 1064 nm, Pulsanzahl größer/gleich 1, Glasdicke 10 mm, Strahl-Radius (Beam-Waist) beim Eintritt in das Glas < 5 mm, Brechungsindex des Glases 1,5.

Dicke Glas- und Glaskeramiksubstrate mit vorgegebenen Trennlinien könnten also zum einen eine höhere Zuschnitt-Präzision ermöglichen: Zuschnitt und Endmaß stimmen weitgehend überein. Zum anderen lassen sich bestehende Prozessketten, insbesondere für beschichtete Gläser und Glaskeramiken sowie Verbundglasscheiben erheblich vereinfachen.

Eine weitere Anwendung ist die Ausschussminderung: Grünglas, das in eine Glaskeramik umgewandelt werden kann, welches mit Hilfe der vorgegebenen Trennlinien auf Basis einer bildverarbeitenden Messung so zugeschnitten werden kann, dass die Zuschnitte Bereiche mit Defekten auslassen.

Eine weitere Anwendung ist der Zuschnitt von Stapeln mit einer Dicke von mindestens 3,5 mm, d.h. das Versehen eines Stapels von einem oder mehreren Glassubstraten, die einzeln eine geringere Dicke als 3,5 mm aufweisen, mit Vorschädigungen in einem Prozessschritt.

Ausführungsbeispiele

| Bauteil: | Glasplatte |
|---|---|
| Geometrie [Länge × Breite × Dicke] | 50 mm × 50 mm × 3,6 mm |
| Material: | Borosilikatglas |
| Zylinderförmige Vorschädigung: | |
| - Geometrie zyl. Vorschädigung: [Durchmesser × Länge] | 700 nm × 3,6 mm |
| - Anteil zyl. Vorschädigungen: | 99 % |
| - Abstand zw. Vorschädigungen | 7 $\mu$m |
| Mittlere Dichtezunahme im Durchmesser vom 3 $\mu$m: | 1,9 % |
| Kantenrauigheit | 1 $\mu$m |
| Relativer Gewichtsverlust | 1,0 % |

| Bauteil: | Glaskeramikplatte |
|---|---|
| Geometrie [Länge × Breite × Dicke]: | 50 mm × 50 mm × 4,1 mm |
| Material: | Lithiumaluminiumsilikatglaskeramik |
| Zylinderförmige Vorschädigung: | |
| - Geometrie zyl. Vorschädigung: [Durchmesser × Länge] | 600 nm × 4,1 mm |
| - Anteil zyl. Vorschädigungen: | 99,5 % |
| - Abstand zw. Vorschädigungen | 4 $\mu$m |
| Mittlere Dichtezunahme im Durchmesser vom 3 $\mu$m: | 1,5 % |
| Kantenrauigkeit | 0,5 $\mu$m |
| Relativer Gewichtsverlust | 0,5 % |

| Bauteil: | Glaskunstofflaminat |
|---|---|
| Geometrie [Länge × Breite × Dicke]: | 50 mm × 50 mm × 3,6 mm |
| Material [Länge × Breite × Dicke]: | Kalknatronglas [50 mm × 50 mm × 2,3 mm]<br>Kunstofffolie [50 mm × 50 mm × 0,8 mm]<br>Thermisch vorgespanntes Aluminosilikatglas [50 mm × 50 mm × 0,5 mm] |
| Zylinderförmige Vorschädigung: | |
| - Geometrie zyl. Vorschädigung [Durchmesser × Länge]: | < 1 $\mu$m × 3,6 mm |
| - Anteil zyl. Vorschädigungen: | 99,5 % |
| - Abstand zw. Vorschädigungen | 5 $\mu$m |
| Mittlere Dichtezunahme im Radius vom 3 $\mu$m: | Kalknatronglas: 1,6 %<br>Thermisch vorgespanntes Aluminosilikatglas: 1,7 % |

(fortgesetzt)

| Bauteil: | Glaskunstofflaminat |
| --- | --- |
| Kantenrauigkeit | 1 $\mu$m |
| Rel. Gewichtsverlust | 0,5 % |
| | |
| Geometrie [Länge $\times$ Breite $\times$ Dicke]: | 100 $\times$ 200 $\times$ 6,1 |
| Material [Länge $\times$ Breite $\times$ Dicke]: | Kalknatronglas [100 mm $\times$ 200 mm $\times$ 2,75 mm]<br>Kunstofffolie [100 mm $\times$ 200 mm $\times$ 0,6 mm]<br>Kalknatronglas [100 mm $\times$ 200 mm $\times$ 2,75 mm] |
| Zylinderförmige Vorschädigung: | |
| - Geometrie zyl. Vorschädigung [Durchmesser $\times$ Länge]: | <1 $\mu$m $\times$ 6 mm |
| - Anteil zyl. Vorschädigungen: | 99,5 % |
| - Abstand zw. Vorschädigungen | 5 $\mu$m |
| Mittlere Dichtezunahme im Radius vom 3 $\mu$m: | 1,6 % |
| Kantenrauigkeit | 1 $\mu$m |
| Rel. Gewichtsverlust | 0,5 % |

Folgende Laserparameter wurden beispielsweise verwendet, um Bauteile nach Anspruch 1 herzustellen:

Lasertyp: ND-YAG, 1035 nm, gepulst, Repetitionsrate 1 bis 300 kHz
Pulsbreite (FWHM): 10 ps
Pulsenergie: 900 $\mu$J
Pulsform: Einzelpuls oder Pulsfolge mit Abstand 14 ns, 2 ns, 14 ns; Pulsenergie gleichbleibend. Im Anwendungsbeispiel: 4 Pulse in Abstand von 20 ns, Pulsenergie abnehmend.
Strahlformende Optik: Quarzglasaxikon mit 20° Kegelwinkel (140° Apexwinkel)

Die Verfahrgeschwindigkeit v ergibt sich aus der Repetitionsrate R jeweils aus dem gewünschten Abstand L der Einzelmodifikationen zu v = L $\times$ R; z. B. v = 10 $\mu$m $\times$ 100 kHz = 1000 mm/s.

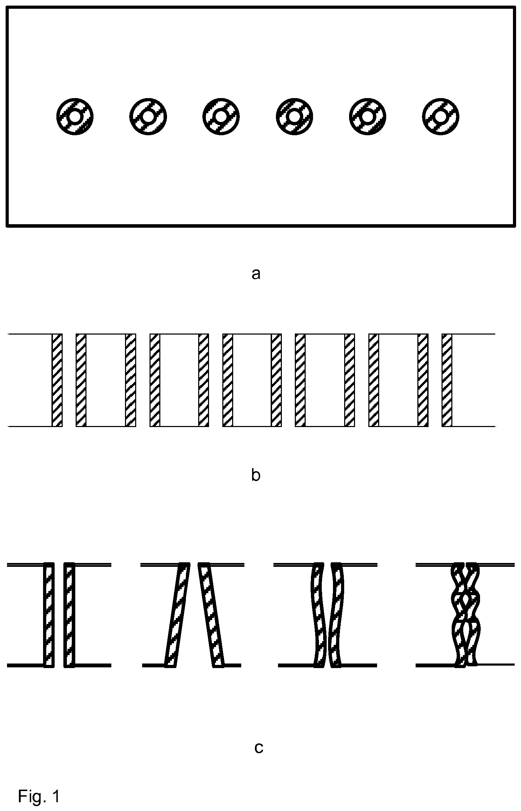

Figur 1a zeigt in Draufsicht schematisch einen vergrößerten Ausschnitt eines 3,8 mm dicken gefloateten Borosilikatglases mit entlang einer vorgegebenen Trennlinie angeordneten Vorschädigungen, die Vorschädigungen sind zylindersymmetrisch, im Radius von 3 $\mu$m um die Längsachse der jeweiligen zylindersymmetrischen Vorschädigung weist das Material eine Verdichtung von mindestens 1 % gegenüber der eigentlichen Materialdichte auf, der relative Gewichtsverlust pro Vorschädigung ist geringer als 10 %. Der Vorschädigungen sind in etwa 7,14 $\mu$m entlang der Trennlinie voneinander beabstandet

Figur 1b zeigt die Kantenansicht von Bauteil aus Figur 1a nachdem es entlang der Trennlinie getrennt ist.

Figur 1c zeigt schematisch die Seitenansicht verschiedener zylindersymmetrischer Vorschädigungen.

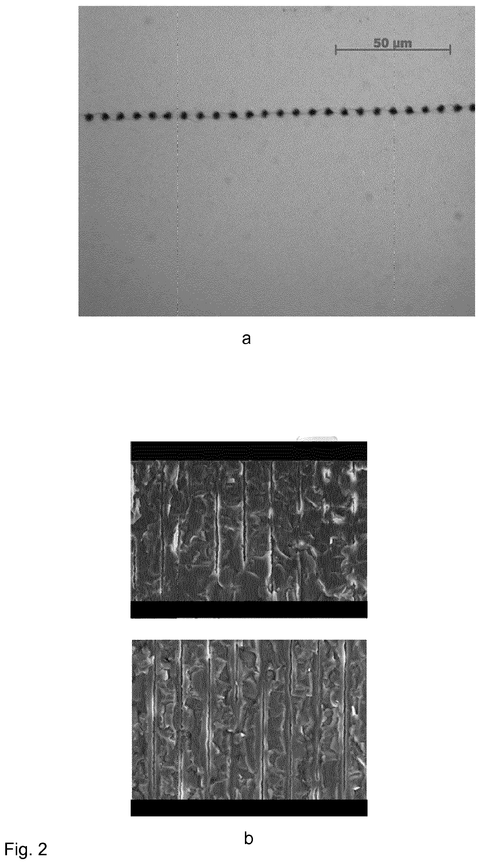

Figur 2a zeigt in Draufsicht, Figur 2b in Seitenansicht ein erfindungsgemäßes Bauteil (Fotographien).

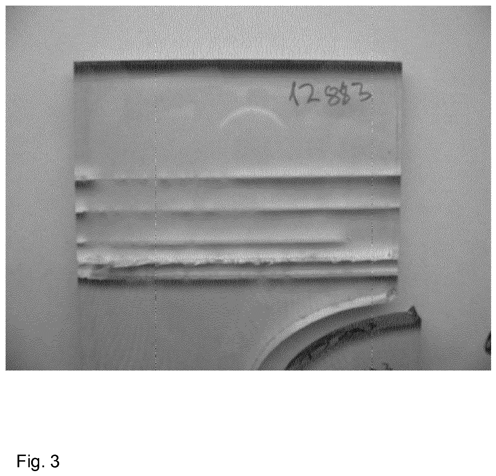

Figur 3 zeigt in Draufsicht einen Ausschnitt eines 3,8 mm dicken gefloateten Borosilikatglases mit entlang einer vorgegebenen Trennlinie angeordneten Vorschädigungen,

die Vorschädigungen sind nicht zylindersymmetrisch,
im Radius von 3 $\mu$m um die Längsachse der jeweiligen zylindersymmetrischen Der Vorschädigungen sind in etwa 7,18 $\mu$m entlang der Trennlinie voneinander beabstandet.

Figur 4 zeigt ein 2D-Raster gebildet aus den zylindrischen Vorschädigungen anhand dessen der Gewichtsverlust ermittelt wurde.

**Patentansprüche**

1. Bauteil, umfassend Glas oder Glaskeramik, mit entlang wenigstens einer vorgegebenen Trennlinie angeordneten Vorschädigungen,

   **dadurch gekennzeichnet,**

   **dass** die Trennlinie aus einer Reihe von hintereinanderliegenden Vorschädigungen besteht, die Vorschädigungen im Glas oder in der Glaskeramik durchgehend sind, wenigstens 90 % der Vorschädigungen zylindersymmetrisch sind, das Glas oder die Glaskeramik im Radius von 3 $\mu$m um die Längsachse der jeweiligen Vorschädigung eine Materialverdichtung von mindestens 1 % gegenüber der eigentlichen Materialdichte aufweist, der relative Gewichtsverlust pro Vorschädigung geringer als 10 % ist, wobei der relative Gewichtsverlust pro Vorschädigung als Quotient eines gemessenen Gewichtsverlusts pro Vorschädigung und eines theoretischen Gewichtsverlusts pro Vorschädigung, wenn das komplette Material der Vorschädigung aus dem Bauteil entfernt werden müsste, berechnet wird, und das Bauteil eine Dicke von mindestens 3,5 mm aufweist.

2. Bauteil nach Anspruch 1, **dadurch gekennzeichnet, dass** die Materialverdichtung basierend auf einer Position eines Lumineszenz-Peaks eines Raman-Spektrums einer Raman-Mikroskop-Aufnahme der jeweiligen Vorschädigung und basierend auf Normspektren für verschiedene Materialdichten berechnet wird.

3. Bauteil nach einem der vorhergehenden Ansprüche,

   **dadurch gekennzeichnet,**

   **dass** die Schnittflächen der Vorschädigungen mit wenigstens einer Oberfläche von Glas oder Glaskeramik kreisförmig sind.

4. Bauteil nach Anspruch 3,

   **dadurch gekennzeichnet,**

   **dass** die Radien der Schnittflächen im Wesentlichen gleich sind.

5. Bauteil nach einem der vorhergehenden Ansprüche,

   **dadurch gekennzeichnet,**

   **dass** das Verhältnis der Betragsdifferenz des Lochdurchmessers der Vorschädigung an der Oberfläche $d_o$ des Bauteils und der Unterseite des Bauteils $d_u$ zur Dicke des Bauteils h beträgt $T = |d_o - d_u|/(2h) < 0{,}001$.

6. Bauteil nach einem der vorhergehenden Ansprüche,

   **dadurch gekennzeichnet,**

   **dass** das Bauteil aus mehreren Schichten besteht, wobei die Schichten aus dem gleichen Material oder aus unterschiedlichem Material bestehen.

7. Bauteil nach einem der vorhergehenden Ansprüche,

   **dadurch gekennzeichnet,**

   **dass** es entlang der vorgegebenen Trennlinie getrennt ist.

8. Bauteil nach Anspruch 7,

   **dadurch gekennzeichnet,**

   **dass** es eine Verglasung für ein Verkehrsmittel oder ein Teil davon ist.

9. Verfahren zur Herstellung eines Bauteils mit einer Dicke von mindestens 3,5 mm, umfassend Glas oder Glaskeramik, mit entlang wenigstens einer vorgegebenen Trennlinie angeordneten Vorschädigungen,

   **dadurch gekennzeichnet,**

   **dass** die Trennlinie aus einer Reihe von hintereinanderliegenden Vorschädigungen erzeugt wird, wobei die Vorschädigungen mittels eines Besselstrahls 0.ter Ordnung erzeugt werden, und wobei die Vorschädigungen im Glas oder in der Glaskeramik durchgehend ausgebildet werden, wobei wenigstens 90 % der Vorschädigungen zylindersymmetrisch ausgebildet werden, wobei das Glas oder die Glaskeramik im Radius von 3 $\mu$m um die Längsachse der jeweiligen Vorschädigung mit einer Materialverdichtung von mindestens 1 % gegenüber der eigentlichen Materialdichte bereitgestellt wird, wobei ein relativer Gewichtsverlust pro Vorschädigung geringer als 10 % bereitgestellt wird, wobei der relative Gewichtsverlust pro Vorschädigung als Quotient eines gemessenen Gewichtsverlusts pro Vorschädigung und eines theoretischen Gewichtsverlusts pro Vorschädigung, wenn das komplette Material der Vorschädigung aus dem Bauteil entfernt werden müsste, berechnet wird.

EP 3 624 983 B1

**10.** Verfahren nach Anspruch 9, **dadurch gekennzeichnet, dass** die Materialverdichtung basierend auf einer Position eines Lumineszenz-Peaks eines Raman-Spektrums einer Raman-Mikroskop-Aufnahme der jeweiligen Vorschädigung und basierend auf Normspektren für verschiedene Materialdichten berechnet wird.

**11.** Verkehrsmittel mit einem Bauteil nach einem der vorhergehenden Ansprüche 1 bis 8.


**Claims**

**1.** Component comprising glass or glass-ceramic, having occurrences of prior damage which are arranged along at least one predetermined separation line,
**characterised in that**
the separation line comprises a series of occurrences of prior damage which are located one behind the other, the occurrences of prior damage are continuous in the glass or glass-ceramic, at least 90% of the occurrences of prior damage are cylindrically symmetrical, the glass or glass-ceramic in the radius of 3 $\mu$m about the longitudinal axis of the respective prior damage has a material compaction of at least 1% with respect to the actual material density, the relative weight loss per occurrence of prior damage is less than 10%, wherein the relative weight loss per occurrence of prior damage is calculated as a quotient of a measured weight loss per occurrence of prior damage and a theoretical weight loss per occurrence of prior damage when the complete material of the occurrence of prior damage would have to be removed from the component, and the component has a thickness of at least 3.5 mm.

**2.** Component according to claim 1, **characterised in that** the material compaction is calculated based on a position of a luminescence peak of a Raman spectrum of a Raman microscopy exposure of the respective prior damage and based on standard spectrums for different material densities.

**3.** Component according to any one of the preceding claims, **characterised in that**
the intersections of the occurrences of prior damage with at least one surface of glass or glass-ceramic are circular.

**4.** Component according to claim 3,
**characterised in that**
the radii of the interfaces are substantially identical.

**5.** Component according to any one of the preceding claims, **characterised in that**
the ratio of the value difference of the hole diameter of the prior damage at the surface $d_o$ of the component and the lower side of the component $d_u$ with respect to the thickness of the component h is T = $|d_o-d_u|/(2h)$ < 0.001.

**6.** Component according to any one of the preceding claims, **characterised in that**
the component comprises a plurality of layers, wherein the layers comprise the same material or different material.

**7.** Component according to any one of the preceding claims, **characterised in that**
it is separated along the predetermined separation line.

**8.** Component according to claim 7,
**characterised in that**
it is a glazing for a means of transport or part thereof.

**9.** Method for producing a component having a thickness of at least 3.5 mm, comprising glass or glass-ceramic, having occurrences of prior damage which are arranged along at least one predetermined separation line,
**characterised in that**
the separation line is produced from a series of occurrences of prior damage which are located one behind the other, wherein the occurrences of prior damage are produced by means of a zero order Bessel beam, and wherein the occurrences of prior damage in the glass or in the glass-ceramic are constructed continuously, wherein at least 90% of the occurrences of prior damage are configured in a cylindrically symmetrical manner, wherein the glass or glass-ceramic in the radius of 3 $\mu$m about the longitudinal axis of the respective prior damage is provided with a material compaction of at least 1% with respect to the actual material density, wherein a relative weight loss per occurrence of prior damage is provided to be less than 10%, wherein the relative weight loss per occurrence of prior damage is calculated as a quotient of a measured weight loss per occurrence of prior damage and a theoretical weight loss per occurrence of prior damage when the complete material of the occurrence of prior damage would

10

have to be removed from the component.

10. Method according to claim 9, **characterised in that** the material compaction is calculated based on a position of a luminescence peak of a Raman spectrum of a Raman microscopy exposure of the respective prior damage and based on standard spectrums for different material densities.

11. Means of transport having a component according to any one of the preceding claims 1 to 8.

**Revendications**

1. Pièce comprenant du verre ou de la vitrocéramique, avec des pré-détériorations disposées le long d'au moins une ligne de séparation prédéterminée,
   **caractérisée en ce que**
   la ligne de séparation est constituée d'une série de pré-détériorations disposées les unes derrière les autres, les pré-détériorations dans le verre ou dans la vitrocéramique sont continues, au moins 90 % des pré-détériorations sont symétriques de manière cylindrique, le verre ou la vitrocéramique présente, dans un rayon de 3 $\mu$m autour de l'axe longitudinal de la pré-détérioration respective, une densification de matériau d'au moins 1 % par rapport à la densité nominale du matériau, la perte de poids relative par pré-détérioration est inférieure à 10 %, dans lequel la perte de poids relative par pré-détérioration est calculé comme le rapport entre une perte de poids mesurée par pré-détérioration et une perte de poids théorique par pré-détérioration, lorsque l'ensemble du matériau de la pré-détérioration doit être éliminé de la pièce et la pièce présente une épaisseur d'au moins 3,5 mm.

2. Pièce selon la revendication 1, **caractérisée en ce que** la densification du matériau est calculée sur la base d'une position d'un pic de luminescence d'un spectre de Raman d'un enregistrement de microscope Raman de la pré-détérioration respective et sur la base de spectres normalisés pour différentes densités de matériau.

3. Pièce selon l'une des revendications précédentes,
   **caractérisée en ce que**
   les faces d'intersection des pré-détériorations avec au moins une surface de verre ou de vitrocéramique sont circulaires.

4. Pièce selon la revendication 3,
   **caractérisée en ce que**
   les rayons des faces d'intersection sont globalement identiques.

5. Pièce selon l'une des revendications précédentes,
   **caractérisée en ce que**
   le rapport entre la différence de valeur du diamètre de trou de la pré-détérioration au niveau de la surface $d_o$ de la pièce et du côté inférieur de la pièce $d_u$ et l'épaisseur de la pièce h est $T = |d_o - d_u|/(2h) < 0,001$.

6. Pièce selon l'une des revendications précédentes,
   **caractérisée en ce que**
   la pièce est constituée de plusieurs couches, dans laquelle les couches sont constituées du même matériau ou de différents matériaux.

7. Pièce selon l'une des revendications précédentes,
   **caractérisée en ce que**
   elle est séparée le long de la ligne de séparation prédéterminée.

8. Pièce selon la revendication 7,
   **caractérisée en ce que**
   il s'agit d'un vitrage pour un moyen de transport ou une partie de celui-ci.

9. Procédé de fabrication d'une pièce avec une épaisseur d'au moins 3,5 mm, comprenant du verre ou de la vitrocéramique, avec des pré-détériorations disposées le long d'au moins une ligne de séparation prédéterminée,
   **caractérisé en ce que**
   la ligne de séparation est produite à partir d'une série de pré-détériorations disposées les unes derrière les autres, dans lequel les pré-détériorations sont produits au moyen d'un faisceau de Bessel d'ordre 0 et dans lequel les pré-détériorations dans le verre ou la vitrocéramique sont réalisées en continu, dans lequel au moins 90 % des pré-détériorations sont symétriques de manière cylindrique, dans lequel le verre ou la vitrocéramique présente, dans un rayon de 3 $\mu$m autour de l'axe longitudinal de la pré-détérioration respective, une densification de matériau d'au moins 1 % par rapport à la densité nominale du matériau, dans lequel une perte de poids relative par pré-détérioration est inférieure à 10 %, dans lequel la perte de poids relative par pré-détérioration est calculé comme le rapport entre une perte de poids mesurée par pré-détérioration et une perte de poids théorique par pré-détérioration, lorsque l'ensemble du matériau de la pré-détérioration doit être éliminé de la pièce.

10. Procédé selon la revendication 9, **caractérisé en ce que** la densification du matériau est calculé sur la base d'une position d'un pic de luminescence d'un spectre de Raman d'un enregistrement de microscope Raman de la pré-détérioration respective et sur la base de spectres normalisés pour différentes densités de matériau.

11. Moyen de transport avec une pièce selon l'une des revendications précédentes 1 à 8.

a

b

c

Fig. 1

a

b

Fig. 2

Fig. 3

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012110971 A1
- DE 102015110422 A1
- DE 102015116848 A1
- DE 102015111491 A1
- DE 102015116846 A1
- DE 102015111490 A1
- DE 102015120950 A1
- DE 102016102768 A1
- DE 102017100015
- DE 102017206461
- DE 102017100755
- DE 102017103381
- EP 2754524 A1
- US 20050024743 A1
- KR 101407994B1
- EP 2922793 A1
- DE 102014116957 A1
- WO 2014079478 A1
- US 2016067822 A1

**In der Beschreibung aufgeführte Nicht-Patentliteratur**

- **AUS ZHANG X.R. et al.** *Simulation of microscale densification during femtosecond laser processing of dielectric materials*
- **NAOYUKI KITAMURA.** *Refractive index of densified silica glass,* 1992
- **SAKAKURA MASAAKI et al.** *Initial temporal and spatial changes of the refractive index induced by focused femtosecond pulsed laser irradiation inside a glass*
- **LITTLE DOUGLAS J. et al.** *Structural changes in BK7 glass upon exposure to femtosecond laser pulses*
- **LENA BRESSEL ; DOMINIQUE DE LIGNY ; CAMILLE SONNEVILLE et al.** Femtosecond laser induced density changes in GeO2 and SiO2 glasses: Fictive temperature effect [Invited. *Optical Materials Express,* 01. August 2011, vol. 1 (4), 605-613
- **PETER DE GROOT.** Principles of interference microscopy for the measurement of surface topographie. *Advances in Optics and Photonics,* 2015, vol. 7, 1-65